# EUROPEAN PATENT SPECIFICATION

(11) **EP 2 249 246 B1**
(45) Date of publication and mention of the grant of the patent: **22.04.2015**
(21) Application number: 08871856.4
(22) Date of filing: 30.12.2008
(51) Int. Cl.: G06F 7/00, H04L 29/08, G06F 17/30, H04L 29/06, G06F 11/14

(54) **METHOD, APPARATUS AND SYSTEM FOR REALIZING FINGERPRINT TECHNOLOGY**
VERFAHREN, VORRICHTUNG UND SYSTEM ZUR REALISIERUNG VON FINGERABDRUCKTECHNOLOGIE
PROCÉDÉ, APPAREIL ET SYSTÈME POUR PRISE D'EMPREINTES DIGITALES

(30) Priority: 24.01.2008 CN 200810026009
(43) Date of publication of application: 10.11.2010
(73) Proprietor: Huawei Technologies Co., Ltd., Longgang District Shenzhen, Guangdong 518129 (CN)
(72) Inventor: LIU, Haitao, Longgang District 518129 Shenzen (CN); WANG, Rui, Longgang District 518129 Shenzen (CN)
(74) Representative: Kreuz, Georg Maria
(86) International application number: PCT/CN2008/073851
(87) International publication number: WO 2009/094889

(56) References cited:
- EP-A1- 1 983 662
- CN-A- 1 561 026
- CN-A- 1 851 659
- US-A1- 2002 038 296
- US-A1- 2004 143 713
- US-A1- 2006 089 954

## Description

### FIELD OF THE TECHNOLOGY

The present invention relates to a data synchronization (DS) technology, and more particularly to a method and a system for realizing a fingerprint technology, a data sending device, and a data receiving device.

### BACKGROUND OF THE INVENTION

Modern society is information society. A user is able to receive and send information at any time and at any place, and is able to execute application programs with a handheld device. The results of the data interaction and the application programs need to be stored in the handheld device, and also need to accord with the data of the type in other data devices. When the data in one device changes, data in other devices can be changed accordingly. This is called data synchronization (DS).

The DS technology uses a method called fingerprint, which is a value obtained from a set of data that is processed through a certain algorithm. Any change of the data may result in different fingerprints, and thus the fingerprints can effectively identify the data. Based on any data from a data element to a database a corresponding fingerprint may be generated. A server uses fingerprints to determine whether the data received from a terminal is the same as the data stored on the server. No matter the data on the server or the terminal changes, the fingerprints are different. If the fingerprint that is received is the same as that is stored, it indicates that the data on the server and the terminal are the same, and the terminal does not need to send the data. If the fingerprints are different, it indicates that the data is changed. At this time, a collision detection strategy is checked, and if the strategy is based on the data on the server, the terminal does not need to send the data either. In this way, some unnecessary data can prevent from being sent by comparing the fingerprints, and therefore, the traffic is saved. In addition, fingerprints may also be used in resumable downloading.

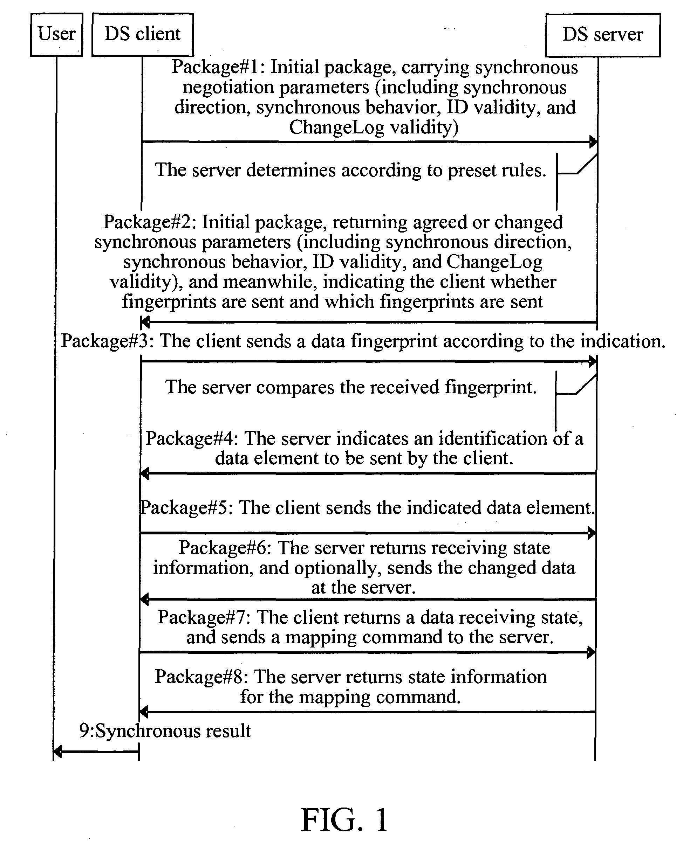

Various algorithms may be adopted for fingerprints. Algorithm negotiation is required to make both of the communicating parties use the same algorithm. One party sends a set of supported algorithms to the other party, and the other party finds the supported fingerprint algorithm and notifies the peer party, thus completing the algorithm negotiation. A synchronous flow used currently is as shown in FIG. 1.
1) Negotiation over the fingerprint use manner is added to PKG 1 and PKG 2.
2) The ID and the fingerprint of the data are sent in PKG 3.
3) After receiving PKG 3, the server compares fingerprints, and indicates an identification of a data element that needs to be sent by a client via PKG 4.
4) After receiving PKG 4, the client sends the required data element according the indication of the server via PKG 5.
5) After receiving PKG 5, the server returns information about a receiving state via PKG 6, and optionally sends the changed data on the server.

EP 1983662 A1 discloses a data synchronization method, system and apparatuses thereof The data synchronization method includes the following processes: sending, by a client, a data characteristic verification message carrying one or multiple data characteristics for data in a client database, to a server; comparing, by the server, the one or multiple data characteristics carried in the data characteristic verification message with the data characteristics for the data in a server database; determining, by the server, the data to be synchronized based on a result of the comparing and sending the client a data characteristic verification response carrying information indicating the determined data to be synchronized; and determining, by the client, the data to be synchronized according to the information in the data characteristic verification response, and synchronizing the determined data to be synchronized with the server. The method, system and apparatus thereof provided by the embodiments of the present disclosure can reduce the amount of data to be transmitted in data synchronization and improve the efficiency of data synchronization.

US2006/0089954 A1 discloses methods, systems and computer program products for providing shared file back-ups in a repository. Methods include receiving metadata of a file to be backed-up from a client. A global directory of back-up files is accessed. The global directory includes back-up file metadata and back-up file pointers corresponding to each of the back-up files in the repository. It is determined if the metadata matches one of the back-up file metadata. If the metadata matches one of the back-up file metadata, then the back-up file pointer corresponding to the matching back-up file metadata is added to a client directory of client back-up files in the repository.

It has become apparent that the existing fingerprint technology has the following disadvantages.

The fingerprints are configured to replace long data elements with short fingerprints, and thus reduce the amount of transmitted data transmission. However, some fingerprints obtained through certain algorithms are longer than the corresponding data when a comparison is performed. At this time, it is meaningless to calculate and send the fingerprints. If the fingerprints are calculated and sent, the calculation amount of the device (particularly, a client device) is increased. Moreover, an additional interaction between the client and the server occurs for certain data items, thus wasting air interface resources. Currently, no technology has been proposed to overcome the disadvantages.

### SUMMARY OF THE INVENTION

The present invention is directed to a method and a system for realizing a fingerprint technology, a data sending device, and a data receiving device, so as to avoid fingerprint calculation for data items with short length and undesired data transmission during the DS. Therefore, the efficiency of the DS is improved.

According to a first aspect, the present invention provides a method for realizing a fingerprint technology, which includes:
Determining, by a data sender, whethera length value of a data element is greater than or equal to a preset minimum length value; and
   when the length value of the data element is greater than or equal to the preset minimum length value, performing, by the data sender, fingerprint calculation for the data element to obtain a fingerprint, and sending, by the data sender, the obtained fingerprint as a data item to a data receiver; and

When the length value of the data element is smaller than the preset minimum length value, sending the data element as a data item to the data receiver without performing fingerprint calculation for the data element.

According to a second aspect, the present invention provides a method for realizing a fingerprint technology, which includes:
Receiving, by a data receiver, a data item from a data sender;
Determining, by the data receiver, whether the data item is a fingerprint or a data element based on preset rules;
when the data item is a fingerprint, comparing, by the data receiver, the fingerprint with a stored fingerprint in the data receiver, and implementing subsequent processes according to a comparison result;
when the data item is a data element, comparing, by the data receiver, the data element with a stored data element in the data receiver, and implementing subsequent processes according to a comparison result;
wherein the determining whether the data item is a fingerprint or a data element based on the preset rules includes:
   determining, by the data receiver, whether a length value of the data item is equal to a preset fingerprint length value after fingerprint calculation, wherein when the length value of the data item is equal to the preset fingerprint length value, it is determined that the data item is the fingerprint obtained through fingerprint calculation; and when the length value of the data item is unequal to the preset fingerprint length value, it is determined that the data item is the data element.

According to a third aspect, the present invention provides a data sending device, which includes a determining module, a fingerprint calculating module, and a data sending module;

The determining module is configured to determine whether a length value of a data element is greater than or equal to a preset minimum length value;

The fingerprint calculating module is configured to generate a corresponding fingerprint according to the data element when the determining module determines that the length value of the data element is greater than or equal to the preset minimum length value; and

The data sending module is configured to send the fingerprint generated by the fingerprint calculating module as a data item to a data receiving device; and send the data element as a data item to the data receiving device without performing fingerprint calculation for the data element when the determining module determines that the length value of the data element is smaller than the preset minimum length value.

According to a fourth aspect, the present invention provides a data receiving device, which includes a data storing module, a data receiving module, a data determining module, and a data processing module;

The data storing module is configured to store a data element or a fingerprint;

The data receiving module is configured to receive a data item sent by a data sending device;

The data determining module is configured to determine whether the data item received by the data receiving module is a fingerprint or a data element based on preset rules;

The data processing module is configured to compare the received fingerprint with the stored fingerprint when the data determining module determines that the received data item is the fingerprint, and implement subsequent processes according to a comparison result; and to compare the received data element with stored data element when the data determining module determines that the received data item is the data element, and implement subsequent processes according to a comparison result
wherein when determining whether the data item received by the data receiving module is a fingerprint or a data element based on preset rules, the data determining module is further configured to determine whether a length value of the data item is equal to a preset fingerprint length value after fingerprint calculation; wherein when the length value of the data item is equal to the preset fingerprint length value, the data item is the fingerprint obtained through fingerprint calculation, and when the length value of the data item is unequal to the preset fingerprint length value, the data item is the data element.

According to a fifth aspect, the present invention provides a system for realizing a fingerprint technology, which includes a data sending device and a data receiving device.

The data sending device is configured to determine whether a length value of a data element is greater than or equal to a preset minimum length value, wherein when the length value of the data element is greater than or equal to the preset minimum length value, fingerprint calculation is performed for the data element to obtain a fingerprint, and the obtained fingerprint is sent as a data item to a data receiving device; and when the length value of the data element is smaller than the preset minimum length value, the data element is sent as a data item to the data receiving device;

The data receiving device is configured to receive the data item from the data sending device, and determine whether the data item is a fingerprint or a data element based on the preset rules, when the data item is a fingerprint, the fingerprint is compared with a stored fingerprint, and subsequent processes are implemented according to a comparison result; when the data item is a data element, the data element is compared with a stored data element, and subsequent processes are implemented according to a comparison result; wherein when determining whether the data item received by the data receiving module is a fingerprint or a data element based on preset rules, the data receiving device is further configured to determine whether a length value of the data item is equal to a preset fingerprint length value after fingerprint calculation; wherein when the length value of the data item is equal to the preset fingerprint length value, the data item is the fingerprint obtained through fingerprint calculation, and when the length value of the data item is unequal to the preset fingerprint length value, the data item is the data element.

The present invention has the following beneficial effects.

By presetting a minimum length value for the data that requires fingerprint calculation, whether a fingerprint needs to be generated for the data item is determined, and whether the fingerprint or the data item is sent is determined accordingly. In this way, fingerprint calculation for data items with short length and undesired data transmission during the DS are avoided, and therefore, the efficiency of the DS is improved.

### BRIEF DESCRIPTION OF THE DRAWINGS

To make the technical solution under the present invention clearer, the accompanying drawings for illustrating the embodiments of the present invention or the prior art are outlined below. Apparently, the accompanying drawings are for the exemplary purpose only.
FIG. 1 is a schematic flow chart of realizing a fingerprint technology in the prior art;
FIG. 2 is a schematic flow chart of a method for realizing a fingerprint technology according to an embodiment of the present invention;
FIG. 3 is a schematic structural diagram of a system for realizing a fingerprint technology according to an embodiment of the present invention;
FIG. 4 is a schematic structural diagram of a data sending device according to an embodiment of the present invention;
FIG. 5 is a schematic structural diagram of a data receiving device according to an embodiment of the present invention; and
FIG. 6 is a schematic structural diagram of a data processing module in the data receiving device as shown in FIG. 5.

### DETAILED DESCRIPTION OF THE EMBODIMENTS

The following detailed description is directed to the technical solution of the present invention with reference to the accompanying drawings. However, the embodiments to be described are only some embodiments of the present invention.

In the embodiments, the present invention provides a method and a system for realizing a fingerprint technology, a data sending device, and a data receiving device, so as to avoid fingerprint calculation for data items with short length and undesired data transmission during the DS, and improve the efficiency of the DS.

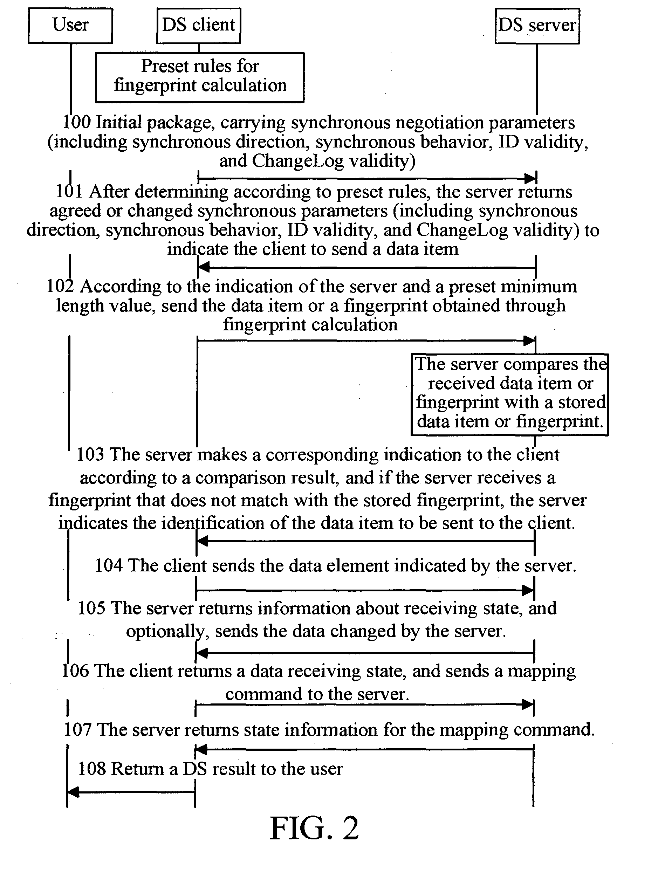

FIG. 2 is a schematic flow chart of a first embodiment for realizing a fingerprint technology according to the present invention.

The embodiment of the present invention is described by taking a client and a server as two sides of the communication, that is, the client serves as a data sender, and the server serves as a data receiver.

Firstly, a minimum length value is preset on the client, and is indicated by an identification FPLimit. FPLimit is integer data, which indicates that fingerprint calculation is performed for a data item only when the length of the data item is longer than or equal to a length specified by FPLimit. If FPLimit does not exist, fingerprint calculation is performed for all the data items. The identification is stored in Device Info, which is related to a device, and Schema is similar to:
<xs: element name ="FPLimit" type ="xs:int" minOccurs="0" />

The identification may also be stored in DS MO, and at this time, a newly-added tree structure in DS MO is as follows.

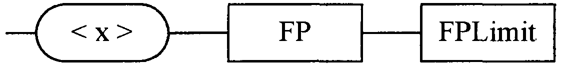

A minimum length of the data item that requires fingerprint calculation is recorded in FPLimit.
<x>/FP

| State | Occurrence number | Format | Access mode |
|---|---|---|---|
| Needed | 1 | Node | Acquire |

<x>/FP is an intermediate node, which records fingerprint-related information of the DS client.
<x>/FP/FPLimit

| State | Occurrence number | Format | Access mode |
|---|---|---|---|
| Needed | 0 or 1 | Integer | Acquire |

The node, <x>/FP/FPLimit, defines the minimum length of the data item that requires fingerprint calculation during the DS process.

In step 100, the client sends PKG 1 to the server. PKG 1 is an initial package, which carries information of synchronous negotiation parameters, including synchronous direction, synchronous behavior, ID validity, ChangeLog validity, and so on. It is well known to persons skilled in the art, and the details will not be given herein again. In the embodiment of the present invention, PKG 1 sent by the client to the server further includes FPlimit.

In step 101, the server receives PKG 1 and stores FPLimit. After determining based on preset rules, the server returns agreed or changed synchronous parameters, including synchronous direction, synchronous behavior, ID validity, ChangeLog validity, and so on, and indicates the client to send the data item.

In step 102, the client determines whether the length value of the sent data item is greater than or equal to the preset minimum length value according to the indication of the server and the preset minimum length value of the data. If the length value of the sent data item is greater than or equal to the preset minimum length value, a corresponding fingerprint is generated according to the data item, that is, fingerprint calculation is performed for the data item, and the obtained fingerprint with a preset fingerprint length is sent to the server. If the length value of the sent data item is smaller than the preset minimum length value, the data element (that is, the data item) is sent to the server. If the length of the data item is equal to the preset fingerprint length, zeros are added to the data item to make its length value equal to the preset minimum length value, and then the data item is sent to the server.

After the server receives the data item from the client, if the length of the received data item is shorter than the preset fingerprint length, or is longer than the preset fingerprint length and shorter than the preset minimum length value, it can be directly determined that it is a data item, that is, the data element, and is directly compared with data stored on the server. If the data length is the preset fingerprint length, the data item is compared with the fingerprint. If the data length is the preset minimum length value, the data item is truncated to the preset fingerprint length value, and is directly compared with the data stored on the server.

The data item determined to be the data element is compared with the data item stored on the server. If the two data items are the same, it indicates that the data on the server and the data on the client are the same, and the client does not need to send the data. If the two data items are different, it indicates that the data is changed. At this time, a collision detection strategy is checked, and if the strategy is based on the data on the server, the server does not need to update the data either. If the strategy is based on the data on the client, the server updates the stored data according to the data item sent by the client.

The data item determined to be the fingerprint is compared with the fingerprint on the server, and subsequent processes are implemented. If the two data items are the same, it indicates that the data on the server and the data on the client are the same, and the terminal does not need to send the data. If the two data items are different, it indicates that the data is changed. At this time, a collision detection strategy is checked, and if the strategy is based on the data on the server, the client does not need to send the data either.

If the strategy is based on the data on the client, in step 103, the server indicates the client to send a data item. In this manner, some unnecessary data transmission can be avoided by comparing the fingerprints, and thus the traffic is saved.

Optionally, an identification FPFlag may be added to the data item sent by the client to the server. FPFlag is an integer data. If FPFlag=0, it indicates that the data item is to be sent. If FPFlag≠0, it indicates that the fingerprint of the data item is to be sent. Different values of FPFlag are adopted to identify different fingerprint algorithms.

It should be noted that, the set of the fingerprint algorithms supported by both the client and the server may be pre-determined through negotiation. In this case, the newly-added structure in DS MO is as follows. 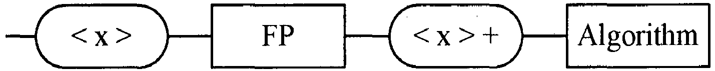 <x>/FP/<x>

| State | Occurrence number | Format | Access mode |
|---|---|---|---|
| Needed | One or more | Node | Acquire |

<x>/FP/<x>is an intermediate node, which records one or more fingerprint algorithms supported by the DS client.
<x>/FP/<x>/Algorithm

| State | Occurrence number | Format | Access mode |
|---|---|---|---|
| Needed | 1 | Integer | Acquire |

<x>/FP/<x>/Algorithm is a leaf node, which records the fingerprint algorithms supported by the DS client. The following is the definitions of the numbers.

| Value | Description |
|---|---|
| 1 | Changed Log |
| 2 | Changed Count |
| 3 | Hash |
| 4 | Fingerprint calculation is performed for partial data items (Sub-Item specific) |

Definitely, the information may also be stored in Device Info. The following is Schema of a fingerprint generation algorithm:
<xs:element name="FPAlgorithm" type="xs: integer" />

The values are configured to indicate the types of the fingerprint algorithms, and the definitions of the values may be the same as those in the above table.

It should be noted that, the client and the server select a sub-set of fingerprint algorithms supported by both sides from the set of supported fingerprint algorithms during the DS. When fingerprint calculation is needed for the data item on the client, a fingerprint algorithm is selected from the sub-set to perform the calculation, and is identified by FPFlag. The obtained fingerprint is sent to the server.

After receiving the data item from the client, the server determines whether the data item is a fingerprint or a data item according to the identification FPFlag of the data item. If the server receives a data item, the data item is compared with the stored data item, and subsequent processes are implemented according to a comparison result. If the two data items are the same, it indicates that the data on the server and the data on the client are the same, and the server does not need to update the data. If the two data items are different, it indicates that the data is changed. At this time, a collision detection strategy is checked, and if the strategy is based on the data on the server, the server does not need to update the data either. If the strategy is based on the data on the client, the server updates the stored data according to the data item sent by the client.

If the server receives a fingerprint, the server compares the received fingerprint and the stored fingerprint, and subsequent processes are implemented according to a comparison result. If the two fingerprints are the same, it indicates that the data on the server and the data on the client are the same, and the terminal does not need to send the data. If fingerprints are different, it indicates that the data is changed. At this time, a collision detection strategy is checked, and if the strategy is based on the data on the server, the client does not need to send the data either.

If the strategy is based on the data on the client, in step 103, the server indicates an identification of the data element that needs to be sent by the client.

In step 104, the client sends the data element indicated by the server.

In step 105, the server returns information about a receiving state to the client, and optionally, returns the changed data.

In step 106, the client returns a data receiving state to the client, and sends a mapping command to the server.

In step 107, the server returns state information for the mapping command to the client.

In step 108, the client returns a DS result to the user.

In the method for realizing a fingerprint technology provided in the embodiment of the present invention, by presetting a minimum length value for the data that requires fingerprint calculation, whether a corresponding fingerprint needs to be generated for the data item is determined, and whether the fingerprint or the data item is sent is determined accordingly. Moreover, an identification is set for each data item to notify the receiver whether a fingerprint or a data item is sent, and to notify the receiver of the used fingerprint algorithm. In this way, fingerprint calculation for data items with short length and undesired data transmission during the DS are avoided, and the efficiency of the DS is improved.

FIG. 2 is a schematic flow chart of a second embodiment for realizing a fingerprint technology according to the present invention.

As shown in FIG. 2, it is assumed that the data in Table 1 needs to be sent on the client, the fingerprint length after a fingerprint algorithm is 8 bytes, and FPLimit is set to 20 bytes. The third column in Table 1 is fingerprint, and it should be noted that fingerprint calculation is only performed for data items with a length longer than or equal to FPLimit (20 bytes). It should be noted that, if the data item is 8 bytes, zeros are added to the data till it reaches 20 bytes. When the server finds a data of 20 bytes, the data is directly truncated to 8 bytes, and is treated as a data element.

**Table 1**

| LUID | Data | FingerPrint |
|---|---|---|
| 1012 | Tom | - |
| 1013 | BEGIN:VCARD | 0xBDEFEOFFAAFFBBAA |
| | VERSION:2.1 | |
| | EMAIL: aaa@bbb.com | |
| | TEL;HOME:(123) 456-789 | |
| | END:VCARD | |
| 1014 | Bike | - |
| 1015 | A File with length 10000 bytes | 0xAAEF3111577566DD |
| 1017 | abcd.com | abcd.com000000000000 |

In step 100, the client sends PKG 1 to the server. PKG 1 is an initial package, which carries information of synchronous negotiation parameters, including synchronous direction, synchronous behavior, ID validity, ChangeLog validity, and so on. It is well known to persons skilled in the art, and the details will not be given herein again. In the embodiment of the present invention, PKG 1 sent by the client to the server further includes FPlimit.
Pkg#1:
<FPLimit> 20 </FPLimit>

In step 101, the server receives PKG 1 and stores FPLimit. After determining based on preset rules, the server returns agreed or changed synchronous parameters.

In step 102, the client sends PKG 3, and according to Table 1, if a fingerprint is found, the ID and the fingerprint are sent; if no fingerprint is found, the ID and the data item are sent.

After the server receives PKG 3, if the length of the data in the received data item is shorter than the fingerprint length (8 bytes), or is longer than 8 bytes and shorter than 20 bytes, it can be directly determined that it is a data item, and is directly compared with the data item stored on the server. If the data length is 8 bytes, the data item is compared with the fingerprint stored on the server. If the length is 20 bytes, the data item is truncated to 8 bytes, and is directly compared with the data item stored on the server.

Data items 1012 and 1014 may be determined as data items, and are compared with the data items stored on the server. If the two data items are different, and the client is superior in a collision strategy, subsequent processes can be directly performed, and the server does not need to notify the client to send the two data items via PKG 4.

For a data item 1017 having a length of 20 bytes, the data item 1017 is truncated to 8 bytes and then compared with the data item, and subsequent processes are implemented afterwards. If the data items are the same, it indicates that the data on the server and the data on the client are the same, and the server does not need to update the data. If the data items are different, it indicates that the data is changed. At this time, a collision detection strategy is checked, and if the strategy is based on the data on the server, the server does not need to update the data either. If the strategy is based on the data on the client, the server updates the stored data according to the data item sent by the client.

For data items 1013 and 1015, since the length of the data in the data item is 8 bytes, the data item is compared with the fingerprints on the server, and subsequent processes are implemented. If the fingerprints are the same, it indicates that the data on the server and the data on the client are the same, and the terminal does not need to send the data. If the fingerprints are different, it indicates that the data is changed. At this time, a collision detection strategy is checked, and if the strategy is based on the data on the server, the client does not need to send the data either.

If the strategy is based on the data on the client, in step 103, the server indicates the client to send the data item. In this manner, some unnecessary data transmission can be avoided by comparing the fingerprints, and thus the traffic is saved.

The following steps are the same with those in the first embodiment, which is also well known to persons skilled in the art, and the details will not be given herein again.

FIG. 2 is a schematic structural view of a third embodiment for realizing a fingerprint technology according to the present invention.

It is assumed that the data in Table 2 needs to be sent on the client. The third column in Table 2 is an identification FPFlag, and the values in the column are set by the device. "0" represents the data item, and the other values represent that fingerprints are sent, and indicate different fingerprint algorithms. Table 3 shows a set of fingerprint algorithms supported by a client and a server through negotiation.

**Table 2**

| LUID | Data | FPFlag |
|---|---|---|
| 1012 | Tom | 0 |
| 1013 | BEGIN:VCARD | 1 |
| | VERSION:2.1 | |
| | EMAIL: aaa@bbb.com | |
| | TEL;HOME:(123) 456-789 | |
| | END:VCARD | |
| 1014 | Bike | 0 |
| 1015 | A File with length 10000 bytes | 3 |
| 1017 | abcd.com | 0 |

**Table 3**

| Value | Description |
|---|---|
| 1 | Changed Log |
| 2 | Changed Count |
| 3 | Hash |
| 4 | Fingerprint calculation is performed for partial data items (Sub-Item specific) |

In step 100, the client sends PKG 1 to the server. PKG 1 is an initial package, which carries information of synchronous negotiation parameters, including synchronous direction, synchronous behavior, ID validity, ChangeLog validity, and so on. It is well known to persons skilled in the art, and the details will not be given herein again.
Pkg#1:
<FPLimit> 20 </FPLimit>

In step 101, after determining based on preset rules, the server returns agreed or changed synchronous parameters.

In step 102, the client sends PKG 3, which includes a data item. According to Table 2, if FPflag#0, fingerprint calculation is performed for the data item, and the ID and the fingerprint are sent; if FPFlag=0, the ID and the data item are sent. It should be noted that, the values of FPFlag are determined according to the result whether the length value of the data item is greater than or equal to the preset minimum length.

After receiving PKG 3, the server determines that 1012, 1014, and 1017 receive the data item according to the values of FPFlag. Comparing the data item with the one stored on the server, if the two items are different and the client is superior in a collision strategy, subsequent processes can be directly performed, and the server does not need to notify the client to send data via PKG 4.

1013 and 1015 receive fingerprints, in which 1013 receives a fingerprint obtained through Change Log algorithm, and 1015 receives a fingerprint obtained through Hash algorithm. Therefore, the fingerprint is compared with the one stored on the server, and subsequent processes are implemented. If the two fingerprints are the same, it indicates that the data on the server and the data on the client are the same, and the terminal does not need to send the data. If the two fingerprints are different, it indicates that the data is changed. At this time, a collision detection strategy is checked, and if the strategy is based on the data on the server, the client does not need to send the data either.

If the strategy is based on the data on the client, in step 103, the server indicates the client to send the data item. In this manner, some unnecessary data transmission can be avoided by comparing the fingerprints, and thus the traffic is saved.

The following steps are the same with those in the first embodiment, which is also well known to persons skilled in the art, and the details will not be given herein again.

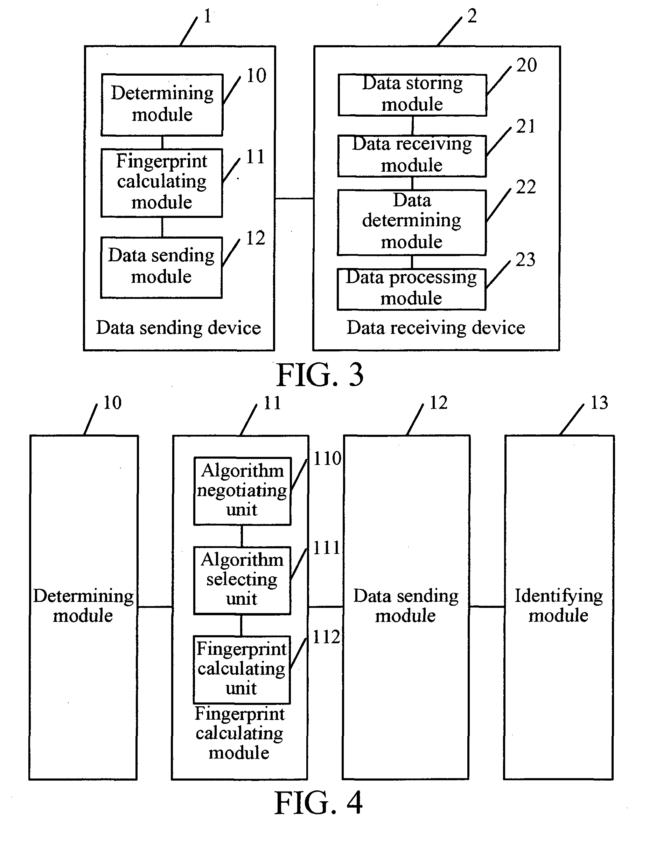

FIG. 3 is a schematic structural diagram of a system for realizing a fingerprint technology according to an embodiment of the present invention.

As shown in FIG. 3, the system includes a data sending device 1 and a data receiving device 2.

The data sending device 1 is configured to determine whether a corresponding fingerprint needs to be generated according to a data item based on preset rules. If it is determined that the corresponding fingerprint needs to be generated according to the data item, fingerprint calculation is performed for the data item, and an obtained fingerprint is sent to the data receiving device 2. If it is determined that the corresponding fingerprint does not need to be generated, a data element is sent to the data receiving device 2.

Specifically, the data sending device 1 includes a determining module 10, a fingerprint calculating module 11, and a data sending module 12, the structures and functions of which will be described in detail below with FIG. 4.

The data receiving device 2 is configured to receive the data item from the data sending device 1, and determine whether the data item is a fingerprint or a data element based on the preset rules. If the data item is a fingerprint, the fingerprint is compared with a stored fingerprint, and subsequent processes are implemented according to a comparison result. If the data item is a data element, the data element is compared with a stored data element, and subsequent processes are implemented according to a comparison result.

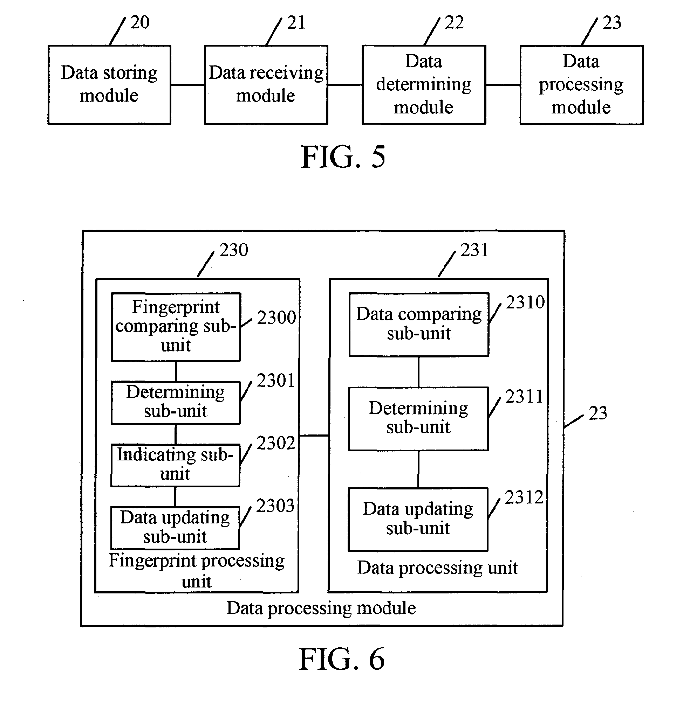

Specifically, the data receiving device 2 includes a data storing module 20, a data receiving module 21, a data determining module 22, and a data processing module 23, the structures and functions of which will be described in detail below with FIG. 5.

FIG. 4 is a schematic structural diagram of the data sending device according to an embodiment of the present invention.

The embodiment of the present invention is described by taking a client as the data sending device.

As shown in FIG. 4, the client includes the determining module 10, the fingerprint calculating module 11, and the data sending module 12.

The determining module 10 is configured to determine whether a length value of a sent data item is greater than or equal to a preset minimum length value. It should be noted that, the preset minimum length value on the server is indicated with an identification FPLimit. FPLimit is an integer data, which indicates that a corresponding fingerprint is generated according to the data item only when the length of the data item is longer than or equal to a length specified by FPLimit.

The fingerprint calculating module 11 is configured to generate a corresponding fingerprint according to the data item, that is, to perform fingerprint calculation for the data item, when the determining module determines that the length value of the data item is greater than or equal to the preset minimum length value. The set of fingerprint algorithms supported by the client and the server may be determined through negotiation. During the DS, the client and the server select a sub-set of fingerprint algorithms supported by both sides from the set of supported fingerprint algorithms. When fingerprint calculation is needed for the data item, a fingerprint algorithm is selected from the sub-set to perform the fingerprint calculation, and an obtained fingerprint is sent to the server.

The data sending module 12 is configured to send the fingerprint generated by the fingerprint calculating module 11 to the data receiving device; or to send the data item (that is, the data element) to the data receiving device when the determining module 10 determines that the length value of the data item is smaller than the preset minimum length value. If the length of the data item is equal to the preset fingerprint length, zeros are added to the data item to make its length value equal to the preset minimum length value FPLimit, and then the data item is sent to the data receiving device. Herein, the data receiving device is a server.

Optionally, the data sending device (that is, the client 1) further includes an identifying module 13, configured to add an identification FPFlag to the data item sent by the data sending module 12 to the data receiving device. The identification FPFlag indicates whether the data item is the fingerprint obtained through fingerprint calculation or the data item.

The fingerprint calculating module 11 includes an algorithm negotiating unit 110, an algorithm selecting unit 111, and a fingerprint calculating unit 112.

The algorithm negotiating unit 110 is configured to negotiate with the data receiving device over the set of fingerprint algorithms supported by both sides. The set of fingerprint algorithms supported by both sides through negotiation between the client and the server is as shown in Table 3.

The algorithm selecting unit 111 is configured to select a fingerprint algorithm from the set of fingerprint algorithms supported by both sides to calculate the data item when fingerprint calculation needs to be performed for the data item.

The fingerprint calculating unit 112 is configured to perform fingerprint calculation for the data item that needs to generate a fingerprint with the algorithm selected by the algorithm selecting unit 111. An algorithm type of the data item when the fingerprint calculation is performed is indicated by the identification.

FIG. 5 is a schematic structural diagram of the data receiving device according to an embodiment of the present invention.

The embodiment of the present invention is described by taking a server as the data receiving device.

As shown in FIG. 5, the server includes the data storing module 20, the data receiving module 21, the data determining module 22, and the data processing module 23.

The data storing module 20 is configured to store data or a fingerprint, in which the data or fingerprint is used to be compared with a received data element or fingerprint, so as to determine whether the received data element or fingerprint is changed.

The data receiving module 21 is configured to receive a data item sent from the data sending device (that is, the client).

The data determining module 22 is configured to determine whether the data item received by the data receiving module 21 is a fingerprint or a data item. If the length of the received data item is shorter than the preset fingerprint length, or is longer than the preset fingerprint length and shorter than the preset minimum length value, it can be directly determined that it is the data item, that is, the data element. If the data length is the preset fingerprint length, it is determined that the data item is a fingerprint. If the data length is the preset minimum length value, it is determined that the data item is a data element (that is, the data item), and the data item is truncated to the preset fingerprint length value, and directly compared with the data stored in the data storing module 20.

It should be noted that, the set of the fingerprint algorithms supported by the client and the server may be determined through negotiation. The client and the server select a sub-set of fingerprint algorithms supported by both sides from the set of supported fingerprint algorithms. When fingerprint calculation is needed for the data item, a fingerprint algorithm is selected from the sub-set to perform the calculation, and is optionally identified by FPFlag. The obtained fingerprint is sent to the server. FPFlag is an integer data. If FPFlag=0, it indicates that the data item is to be sent. If FPFlag≠0, it indicates that the fingerprint of the data item is to be sent. Different values of FPFlag are adopted to identify different fingerprint algorithms.

The data processing module 23 is configured to compare the fingerprint with a stored fingerprint when the data determining module 22 determines that the received data item is the fingerprint, and subsequent processes are implemented according to a comparison result. If the data item is a data element, the data element is compared with data stored in the data storing module 20. If the length of the data item is the minimum present length value, the data item is truncated to the preset fingerprint length value and directly compared with the data stored in the data storing module 20, and subsequent processes are implemented according to a comparison result.

FIG. 6 is a schematic structural diagram of the data processing module 23 in the data receiving device 2 as shown in FIG. 5. As shown in FIG. 6, the data processing module 23 includes a fingerprint processing unit 230 and a data processing unit 231.

The fingerprint processing unit 230 is configured to compare the fingerprint with the one stored in the data storing module 20 when the data determining module 22 determines that the data item received by the data receiving module 21 is a fingerprint, and implement subsequent processes according to the comparison result.

The data processing unit 231 is configured to compare the data item with the data stored in the data storing module 20 when the data determining module 22 determines that the data item received by the data receiving module 21 is a data element (that is, the data item), and implement subsequent processes according to the comparison result.

The fingerprint processing unit 230 includes a fingerprint comparing sub-unit 2300.

The fingerprint comparing sub-unit 2300 is configured to compare the fingerprint with the stored fingerprint when the data determining module 22 determines that the received data item is the fingerprint. If the two fingerprints are the same, the data stored in the data storing module 20 does not need to be updated; if the two fingerprints are different, it indicates that the data item of the data sending device is changed.

The fingerprint processing unit 230 further includes a determining sub-unit 2301, configured to check a collision detection strategy and determine whether the data sending device needs to send the data item. If the collision detection strategy is based on the data on the data receiving device, the data sending device does not need to send the data item. If the collision detection strategy is based on the data on the data sending device, the fingerprint processing unit 230 further includes an indicating sub-unit 2302 and a data updating sub-unit 2303.

The indicating sub-unit 2302 is configured to indicate the data sending device to send the data element.

The data updating sub-unit 2303 is configured to update the data stored in the data storage unit 20 into the received data element.

The data processing unit 231 includes a data comparing sub-unit 2310.

The data comparing sub-unit 2310 is configured to compare the data element with the data stored in the data storing module 20 when the data determining module 22 determines that the received data item is a data element. If the two fingerprints are the same, the data stored in the data storing module 20 does not need to be updated; if the two fingerprints are different, it indicates that the data item of the data sending device is changed.

The data processing unit 231 further includes a determining sub-unit 2311, configured to check a collision detection strategy and determine whether the data sending device needs to send the data item. If the collision detection strategy is based on the data of the data receiving device, the data stored in the data storage device 20 does not need to be updated. If the collision detection strategy is based on the data of the data sending device, the data processing unit 231 further includes a data updating sub-unit 2312.

The data updating sub-module 2312 is configured to update the data stored in the data storage unit 20 into the received data element.

Through the descriptions of the preceding embodiments, those skilled in the art may understand that the present invention may be implemented by hardware only or by software and a necessary universal hardware platform. Based on such understandings, all or part of the technical solution under the present invention that makes contributions to the prior art may be essentially embodied in the form of a software product. The software product may be stored in a storage medium, which can be a magnetic disk, a Compact Disk Read-Only Memory (CD-ROM), a Read-Only Memory (ROM) or a Random Access Memory (RAM). The software product includes a number of instructions that enable a computer device (personal computer, server, or network device) to execute the methods provided in the embodiments of the present invention.

In the method and system for realizing a fingerprint technology, the data sending device, and the data receiving device provided in the embodiments of the present invention, by presetting a minimum length for the data that requires fingerprint calculation, whether a corresponding fingerprint needs to be generated for the data item is determined, and whether the fingerprint or the data item is sent is determined accordingly. Moreover, an identification is set for each data item to notify the receiver whether a fingerprint or a data item is sent, and to notify the receiver of the used fingerprint algorithm. In this way, fingerprint calculation for data items with short length and undesired data transmission during the DS are avoided, and the efficiency of the DS is improved.

It should be noted that the above descriptions are merely preferred embodiments of the present invention.

## Claims

1. A method for realizing a fingerprint technology, comprising:
determining, by a data sender, whether a length value of a data element is greater than or equal to a preset minimum length value; and
when the length value of the data element is greater than or equal to the preset minimum length value, performing, by the data sender, fingerprint calculation for the data element to obtain a fingerprint, and sending, by the data sender, the obtained fingerprint as a data item to a data receiver; and
when the length value of the data element is smaller than the preset minimum length value, sending the data element as a data item to the data receiver without performing fingerprint calculation for the data element.

2. The method according to claim 1, wherein each fingerprint is one with a preset fingerprint length value; and the method further comprises:
when the length value of the data element is equal to the preset fingerprint length value, adding, by the data sender, zeros to the data element till the length of the data element increases to the preset minimum length value to obtain an increased data element, and sending, by the data sender the increased data element as a data item to the data receiver.

3. The method according to claim 1 or 2, further comprising:
adding, by the data sender, an identification to the data item so as to indicate to the data receiver whether the data item is a data element or a fingerprint;
negotiating, by the data sender and the data receiver, over a set of fingerprint algorithms supported by both sides; and
when fingerprint calculation needs to be performed for the data element, selecting, by the data sender, a fingerprint algorithm from the set of fingerprint algorithms supported by both sides to calculate the data element, wherein an algorithm type used in the fingerprint calculation for the data element is indicated by the identification.

4. A method for realizing a fingerprint technology, comprising:
receiving, by a data receiver, a data item from a data sender;
determining, by the data receiver, whether the data item is a fingerprint or a data element based on preset rules;
when the data item is a fingerprint, comparing, by the data receiver, the fingerprint with a stored fingerprint in the data receiver, and implementing subsequent processes according to a comparison result; and
when the data item is a data element, comparing, by the data receiver, the data element with a stored data element in the data receiver, and implementing subsequent processes according to a comparison result;
wherein the determining whether the data item is a fingerprint or a data element based on the preset rules comprises:
determining, by the data receiver, whether a length value of the data item is equal to a preset fingerprint length value after fingerprint calculation, wherein when the length value of the data item is equal to the preset fingerprint length value, it is determined that the data item is the fingerprint obtained through fingerprint calculation; and when the length value of the data item is unequal to the preset fingerprint length value, it is determined that the data item is the data element.

5. The method according to claim 4, wherein the method further comprises:
when the length value of the data item is equal to a preset minimum length value, truncating, by the data receiver, the data item to the preset fingerprint length value to obtain the data element.

6. The method according to claim 4 or 5, wherein the comparing , by the data receiver, the fingerprint with the stored fingerprint in the data receiver, and implementing subsequent processes according to the comparison result comprises:
when the two fingerprints are the same, the data element stored by the data receiver does not need to be updated; and when the two fingerprints are different, which indicates that the data element of the data sender is changed, checking a collision detection strategy; and
when the strategy is based on the data element on the data receiver, determining that the data sender does not need to send the data element; and when the strategy is based on the data element on the data sender, determining that the data sender needs to send the data element, and the data sender is indicated to send the data element.

7. A data sending device (1), comprising:
a determining module (10), configured to determine whether a length value of a data element is greater than or equal to a preset minimum length value;
a fingerprint calculating module (11), configured to generate a corresponding fingerprint according to the data element when the determining module determines that the length value of the data element is greater than or equal to the preset minimum length value; and
a data sending module (12), configured to send the fingerprint generated by the fingerprint calculating module as a data item to a data receiving device; and send the data element as a data item to the data receiving device without performing fingerprint calculation for the data element when the determining module determines that the length value of the data element is smaller than the preset minimum length value.

8. The data sending device according to claim 7, further comprising:
an identifying module, configured to add an identification to the data item, wherein the identification indicates whether the data item is a fingerprint or a data element.

9. The data sending device according to claim 7 or 8, wherein the fingerprint calculating module (11) comprises:
an algorithm negotiating unit (110), configured to negotiate with the data receiving device over a set of fingerprint algorithms supported by both sides;
an algorithm selecting unit (111), configured to select a fingerprint algorithm from the set of fingerprint algorithms supported by both sides to calculate the data element when fingerprint calculation needs to be performed for the data element; and
a fingerprint calculating unit (112), configured to perform fingerprint calculation for the data element that needs to generate a fingerprint with the algorithm selected by the algorithm selecting unit, wherein an algorithm type of the data element is indicated by the identification when the fingerprint calculation is performed.

10. A data receiving device (2), comprising:
a data receiving module (21), configured to receive a data item sent by a data sending device (1);
a data determining module (22), configured to determine whether the data item received by the data receiving module is a fingerprint or a data element based on preset rules;
a data storing module (20), configured to store a data element or a fingerprint; and
a data processing module (23), configured to compare the received fingerprint with the stored fingerprint when the data determining module determines that the received data item is a fingerprint, and implement subsequent processes according to a comparison result; and to compare the received data element with the stored data element when the data determining module determines that the received data item is a data element, and implement subsequent processes according to a comparison result;
wherein when determining whether the data item received by the data receiving module is a fingerprint or a data element based on preset rules, the data determining module (22) is further configured to determine whether a length value of the data item is equal to a preset fingerprint length value after fingerprint calculation; wherein when the length value of the data item is equal to the preset fingerprint length value, the data item is the fingerprint obtained through fingerprint calculation, and when the length value of the data item is unequal to the preset fingerprint length value, the data item is the data element.

11. The data receiving device according to claim 10, wherein the data processing module (23) comprises:
a fingerprint processing unit (230), configured to compare the received fingerprint with the stored fingerprint when the data determining module determines that the received data item is the fingerprint, and implement subsequent processes according to the comparison result; and
a data processing unit (231), configured to compare the received data element with the stored data element when the data determining module determines that the received data item is the data element, and implement subsequent processes according to the comparison result.

12. The data receiving device according to claim 11, wherein the fingerprint processing unit (230) comprises:
a fingerprint comparing sub-unit (2300), configured to compare the received fingerprint with the stored fingerprint when the data determining module determines that the received data item is the fingerprint, wherein when the two fingerprints are the same, the data element stored in the data receiving device does not need to be updated; and when the two fingerprints are different, it indicates that the data element of the data sending device is changed;
a determining sub-unit (2301), configured to check a collision detection strategy and determine whether the data sending device needs to send the data element, wherein when the collision detection strategy is based on the data element on the data receiving device, the data sending device does not need to send the data element;
an indicating sub-unit (2302), configured to indicate the data sending device to send the data element when the two fingerprints are different and the collision detection strategy is based on the data element on the data sending device; and
a data updating sub-unit (2303), configured to update the stored data element into the received data element.

13. The data receiving device according to claim 11 or 12, wherein the data processing unit (231) comprises:
a data comparing sub-unit (2310), configured to compare the received data element with the stored data element when the data determining module determines that the received data element is the data element, wherein when the two data elements are the same, the data element stored in the data receiver does not need to be updated; and when the two data elements are different, it indicates that the data element of the data sending device is changed; and
the data processing unit further comprises: a determining sub-unit (2311), configured to check the collision detection strategy and determine whether the data element stored in the data receiving device needs to be updated, wherein when the collision detection strategy is based on the data element on the data receiving device, the data element on the data receiving device does not need to be updated;
a data updating sub-unit (2312), configured to update the data element stored in the data receiving device into the received data element when the two fingerprints are different and the collision detection strategy is based on the data element on the data sending device.

14. A system for realizing a fingerprint technology, comprising: the data sending device according to any one of claims 7 to 9, and the data receiving device according to any one of claims 10 to 13.

## Patentansprüche

1. Verfahren zum Ausführen einer Fingerabdrucktechnologie, das die folgenden Schritte aufweist:
Feststellen durch einen Datensender, ob ein Längenwert eines Datenelements größer oder gleich einem voreingestellten minimalen Längenwert ist; und
wenn der Längenwert des Datenelements größer oder gleich dem voreingestellten minimalen Längenwert ist, Durchführen durch den Datensender von Fingerabdruckberechnung für das Datenelement, um einen Fingerabdruck zu erhalten, und Senden durch den Datensender des erhaltenen Fingerabdrucks als Datenwort an einen Datenempfänger; und
wenn der Längenwert des Datenelements kleiner als der voreingestellte minimale Längenwert ist, Senden des Datenelements als Datenwort an den Datenempfänger ohne Durchführen von Fingerabdruckberechnung für das Datenelement.

2. Verfahren nach Anspruch 1, wobei jeder Fingerabdruck einer mit einem voreingestellten Fingerabdruck-Längenwert ist; und das Verfahren ferner aufweist:
wenn der Längenwert des Datenelements gleich dem voreingestellten Fingerabdruck-Längenwert ist, Hinzufügen durch den Datensender von Nullen zum Datenelement, bis die Länge des Datenelements auf den voreingestellten minimalen Längenwert zunimmt, um ein vergrößertes Datenelement zu erhalten, und Senden des vergrößerten Datenelements als Datenwort an den Datenempfänger durch den Datensender.

3. Verfahren nach Anspruch 1 oder 2, das ferner aufweist:
Hinzufügen durch den Datensender einer Kennzeichnung zum Datenwort, um dem Datenempfänger anzuzeigen, ob das Datenwort ein Datenelement oder ein Fingerabdruck ist;
Verhandeln durch den Datensender und den Datenempfänger über einen Satz von Fingerabdruckalgorithmen, der von beiden Seiten unterstützt wird; und
wenn Fingerabdruckberechnung für das Datenelement durchgeführt werden muss, Auswählen durch den Datensender eines Fingerabdruckalgorithmus aus dem Satz der Fingerabdruckalgorithmen, der von beiden Seiten unterstützt wird, um das Datenelement zu berechnen, wobei ein bei der Fingerabdruckberechnung für das Datenelement verwendeter Algorithmustyp durch die Kennzeichnung angezeigt wird.

4. Verfahren zum Ausführen einer Fingerabdrucktechnologie, das die folgenden Schritte aufweist:
Empfangen durch einen Datenempfänger eines Datenworts von einem Datensender;
Feststellen durch den Datenempfänger, ob das Datenwort ein Fingerabdruck oder ein Datenelement ist, beruhend auf voreingestellten Regeln;
wenn das Datenwort ein Fingerabdruck ist, Vergleichen durch den Datenempfänger des Fingerabdrucks mit einem gespeicherten Fingerabdruck im Datenempfänger, und Ausführen von nachfolgenden Prozessen gemäß einem Vergleichsergebnis; und
wenn das Datenwort ein Datenelement ist, Vergleichen durch den Datenempfänger des Datenelements mit einem gespeicherten Datenelement im Datenempfänger, und Ausführen von nachfolgenden Prozessen gemäß einem Vergleichsergebnis;
wobei das Feststellen, ob das Datenwort ein Fingerabdruck oder ein Datenelement ist, beruhend auf den voreingestellten Regeln aufweist:
Feststellen durch den Datenempfänger, ob ein Längenwert des Datenworts gleich einem voreingestellten Fingerabdruck-Längenwert ist, nach der Fingerabdruckberechnung, wobei wenn der Längenwert des Datenworts gleich dem voreingestellten Fingerabdruck-Längenwert ist, festgestellt wird, dass das Datenwort der durch Fingerabdruckberechnung erhaltene Fingerabdruck ist; und wenn der Längenwert des Datenworts ungleich dem voreingestellten Fingerabdruck-Längenwert ist, festgestellt wird, dass das Datenwort das Datenelement ist.

5. Verfahren nach Anspruch 4, wobei das Verfahren ferner aufweist:
wenn der Längenwert des Datenworts gleich einem voreingestellten minimalen Längenwert ist, Kürzen durch den Datenempfänger des Datenworts auf den voreingestellten Fingerabdruck-Längenwert, um das Datenelement zu erhalten.

6. Verfahren nach Anspruch 4 oder 5, wobei das Vergleichen durch den Datenempfänger des Fingerabdrucks mit dem gespeicherten Fingerabdruck im Datenempfänger und das Ausführen von nachfolgenden Prozessen gemäß dem Vergleichsergebnis aufweist:
wenn die beiden Fingerabdrücke dieselben sind, muss das durch den Datenempfänger gespeicherte Datenelement nicht aktualisiert werden; und wenn sich die beiden Fingerabdrücke unterscheiden, was anzeigt, dass sich das Datenelement des Datensenders geändert hat, Prüfen einer Kollisionserkennungsstrategie; und
wenn die Strategie auf dem Datenelement am Datenempfänger beruht, Feststellen, dass der Datensender das Datenelement nicht senden muss; und wenn die Strategie auf dem Datenelement am Datensender beruht, Feststellen, dass der Datensender das Datenelement senden muss, und dem Datensender angezeigt wird, das Datenelement zu senden.

7. Datensendevorrichtung (1), die Folgendes aufweist:
ein Feststellungsmodul (10), das konfiguriert ist festzustellen, ob ein Längenwert eines Datenelements größer oder gleich einem voreingestellten minimalen Längenwert ist;
ein Fingerabdruck-Berechnungsmodul (11), das konfiguriert ist, einen entsprechenden Fingerabdruck gemäß dem Datenelement zu erzeugen, wenn das Feststellungsmodul feststellt, dass der Längenwert des Datenelements größer oder gleich dem voreingestellten minimalen Längenwert ist; und
ein Datensendemodul (12), das konfiguriert ist, den durch das Fingerabdruck-Berechnungsmodul erzeugten Fingerabdruck als Datenwort an eine Datenempfangsvorrichtung zu senden; und das Datenelement als Datenwort an die Datenempfangsvorrichtung ohne Durchführen von Fingerabdruckberechnung für das Datenelement zu senden, wenn das Feststellungsmodul feststellt, dass der Längenwert des Datenelements kleiner als der voreingestellte minimale Längenwert ist.

8. Datensendevorrichtung nach Anspruch 7, die ferner aufweist:
ein Kennzeichnungsmodul, das konfiguriert ist, eine Kennzeichnung zum Datenwort hinzuzufügen, wobei die Kennzeichnung anzeigt, ob das Datenwort ein Fingerabdruck oder ein Datenelement ist.

9. Datensendevorrichtung nach Anspruch 7 oder 8, wobei das Fingerabdruck-Berechnungsmodul (11) aufweist:
eine Algorithmus-Verhandlungseinheit (110), die konfiguriert ist, mit der Datenempfangsvorrichtung über einen Satz von Fingerabdruckalgorithmen zu verhandeln, der von beiden Seiten unterstützt wird;
eine Algorithmus-Auswahleinheit (111), die konfiguriert ist, einen Fingerabdruckalgorithmus aus dem Satz von Fingerabdruckalgorithmen auszuwählen, der von beiden Seiten unterstützt wird, um das Datenelement zu berechnen, wenn Fingerabdruckberechnung für das Datenelement durchgeführt werden muss; und
eine Fingerabdruck-Berechnungseinheit (112), die konfiguriert ist, Fingerabdruckberechnung für das Datenelement durchzuführen, das einen Fingerabdruck mit dem durch die Algorithmus-Auswahleinheit ausgewählten Algorithmus erzeugen muss, wobei ein Algorithmustyp des Datenelements durch die Kennzeichnung angezeigt wird, wenn die Fingerabdruckberechnung durchgeführt wird.

10. Datenempfangsvorrichtung (2), die Folgendes aufweist:
ein Datenempfangsmodul (21), das konfiguriert ist, ein Datenwort zu empfangen, das durch eine Datensendevorrichtung (1) gesendet wird;
ein Datenfeststellungsmodul (22), das konfiguriert ist festzustellen, ob das durch das Datenempfangsmodul empfangene Datenwort ein Fingerabdruck oder ein Datenelement ist, beruhend auf voreingestellten Regeln;
ein Datenspeichermodul (20), das konfiguriert ist, ein Datenelement oder einen Fingerabdruck zu speichern; und
ein Datenverarbeitungsmodul (23), das konfiguriert ist, den empfangenen Fingerabdruck mit dem gespeicherten Fingerabdruck zu vergleichen, wenn das Datenfeststellungsmodul feststellt, dass das empfangene Datenwort ein Fingerabdruck ist, und nachfolgende Prozesse gemäß einem Vergleichsergebnis auszuführen; und das empfangene Datenelement mit dem gespeicherten Datenelement zu vergleichen, wenn das Datenfeststellungsmodul feststellt, dass das empfangene Datenwort ein Datenelement ist, und nachfolgende Prozesse gemäß einem Vergleichsergebnis auszuführen;
wobei beim Feststellen, ob das durch das Datenempfangsmodul empfangene Datenwort ein Fingerabdruck oder ein Datenelement ist, beruhend auf voreingestellten Regeln, das Datenfeststellungsmodul (22) ferner konfiguriert ist festzustellen, ob ein Längenwert des Datenworts gleich einem voreingestellten Fingerabdruck-Längenwert ist, nach der Fingerabdruckberechnung; wobei wenn der Längenwert des Datenworts gleich dem voreingestellten Fingerabdruck-Längenwert ist, das Datenwort der durch Fingerabdruckberechnung erhaltene Fingerabdruck ist, und wenn der Längenwert des Datenworts ungleich dem voreingestellten Fingerabdruck-Längenwert ist, das Datenwort das Datenelement ist.

11. Datenempfangsvorrichtung nach Anspruch 10, wobei das Datenverarbeitungsmodul (23) aufweist:
eine Fingerabdruck-Verarbeitungseinheit (230), die konfiguriert ist, den empfangenen Fingerabdruck mit dem gespeicherten Fingerabdruck zu vergleichen, wenn das Datenfeststellungsmodul feststellt, dass das empfangene Datenwort der Fingerabdruck ist, und nachfolgende Prozesse gemäß dem Vergleichsergebnis auszuführen; und
eine Datenverarbeitungseinheit (231), die konfiguriert ist, das empfangene Datenelement mit dem gespeicherten Datenelement zu vergleichen, wenn das Datenfeststellungsmodul feststellt, dass das empfangene Datenwort das Datenelement ist, und nachfolgende Prozesse gemäß dem Vergleichsergebnis auszuführen.

12. Datenempfangsvorrichtung nach Anspruch 11, wobei die Fingerabdruck-Verarbeitungseinheit (230) aufweist:
eine Fingerabdruck-Vergleichsuntereinheit (2300), die konfiguriert ist, den empfangene Fingerabdruck mit dem gespeicherten Fingerabdruck zu vergleichen, wenn das Datenfeststellungsmodul feststellt, dass das empfangene Datenwort der Fingerabdruck ist, wobei wenn die beiden Fingerabdrücke dieselben sind, das in der Datenempfangsvorrichtung gespeicherte Datenelement nicht aktualisiert werden muss; und wenn sich die beiden Fingerabdrücke unterscheiden, das anzeigt, dass sich das Datenelement der Datensendevorrichtung geändert hat;
eine Feststelluntereinheit (2301), die konfiguriert ist, eine Kollisionserkennungsstrategie zu prüfen und festzustellen, ob die Datensendevorrichtung das Datenelement senden muss, wobei wenn die Kollisionserkennungsstrategie auf dem Datenelement an der Datenempfangsvorrichtung beruht, die Datensendevorrichtung das Datenelement nicht senden muss;
eine Anzeigeuntereinheit (2302), die konfiguriert ist, der Datensendevorrichtung anzuzeigen, das Datenelement zu senden, wenn sich die beiden Fingerabdrücke unterscheiden und die Kollisionserkennungsstrategie auf dem Datenelement an der Datensendevorrichtung beruht; und
eine Datenaktualisierungsuntereinheit (2303), die konfiguriert ist, das gespeicherte Datenelement zum empfangenen Datenelement zu aktualisieren.

13. Datenempfangsvorrichtung nach Anspruch 11 oder 12, wobei die Datenverarbeitungseinheit (231) aufweist:
eine Datenvergleichsuntereinheit (2310), die konfiguriert ist, das empfangene Datenelement mit dem gespeicherten Datenelement zu vergleichen, wenn das Datenfeststellungsmodul feststellt, dass das empfangene Datenelement das Datenelement ist, wobei wenn die beiden Datenelemente dieselben sind, das im Datenempfänger gespeicherte Datenelement nicht aktualisiert werden muss; und wenn sich die beiden Datenelemente unterscheiden, das anzeigt, dass sich das Datenelement der Datensendevorrichtung geändert hat; und
die Datenverarbeitungseinheit ferner aufweist: eine Feststelluntereinheit (2311), die konfiguriert ist, die Kollisionserkennungsstrategie zu prüfen und festzustellen, ob das in der Datenempfangsvorrichtung gespeicherte Datenelement aktualisiert werden muss, wobei wenn die Kollisionserkennungsstrategie auf dem Datenelement an der Datenempfangsvorrichtung beruht, das Datenelement an der Datenempfangsvorrichtung nicht aktualisiert werden muss;
eine Datenaktualisierungsuntereinheit (2312), die konfiguriert ist, das in der Datenempfangsvorrichtung gespeicherte Datenelement zum empfangenen Datenelement zu aktualisieren, wenn sich die beiden Fingerabdrücke unterscheiden und die Kollisionserkennungsstrategie auf dem Datenelement an der Datensendevorrichtung beruht.

14. System zum Ausführen einer Fingerabdrucktechnologie, das Folgendes aufweist: die Datensendevorrichtung nach einem der Ansprüche 7 bis 9 und die Datenempfangsvorrichtung nach einem der Ansprüche 10 bis 13.

## Revendications

1. Procédé pour technologie de prise d'empreintes digitales comprenant les étapes suivantes :
déterminer, par un expéditeur de données, si une valeur de longueur d'un élément de données est supérieure ou égale à une valeur de longueur minimale prédéfinie ; et
lorsque la valeur de longueur de l'élément de données est supérieure ou égale à la valeur de longueur minimale prédéfinie, effectuer, par l'expéditeur de données, un calcul d'empreinte digitale pour l'élément de données pour obtenir une empreinte digitale, et envoyer, par l'expéditeur de données, l'empreinte digitale obtenue comme item de données à un récepteur de données ; et
lorsque la valeur de longueur de l'élément de données est inférieure à la valeur de longueur minimale prédéfinie, envoyer l'élément de données comme item de données au récepteur de données sans effectuer de calcul d'empreinte digitale pour l'élément de données.

2. Procédé selon la revendication 1, dans lequel chaque empreinte digitale est une empreinte digitale avec une valeur de longueur d'empreinte digitale prédéfinie ; et le procédé comprend en outre l'étape suivante :
lorsque la valeur de longueur de l'élément de données est égale à la valeur de longueur d'empreinte digitale prédéfinie, ajouter, par l'expéditeur de données, des zéros à l'élément de données jusqu'à ce que la longueur de l'élément de données augmente jusqu'à la valeur de longueur minimale prédéfinie pour obtenir un élément de données augmenté, et envoyer, par l'expéditeur de données, l'élément de données augmenté comme item de données au récepteur de données.

3. Procédé selon la revendication 1 ou la revendication 2, comprenant en outre les étapes suivantes :
ajouter, par l'expéditeur de données, une identification à l'item de données de manière à indiquer au récepteur de données si l'item de données est un élément de données ou une empreinte digitale ;
négocier, par l'expéditeur de données et le récepteur de données, un ensemble d'algorithmes d'empreinte digitale pris en charge par les deux côtés ; et
lorsqu'un calcul d'empreinte digitale doit être effectué pour l'élément de données, sélectionner, par l'expéditeur de données, un algorithme d'empreinte digitale dans l'ensemble d'algorithmes d'empreinte digitale pris en charge par les deux côtés pour calculer l'élément de données, où un type d'algorithme utilisé dans le calcul d'empreinte digitale pour l'élément de données est indiqué par l'identification.

4. Procédé pour technologie de prise d'empreintes digitales, comprenant les étapes suivantes :
recevoir, par un récepteur de données, un item de données d'un expéditeur de données ;
déterminer, par le récepteur de données, si l'item de données est une empreinte digitale ou un élément de données, en se basant sur des règles prédéfinies ;
lorsque l'item de données est une empreinte digitale, comparer, par le récepteur de données, l'empreinte digitale à une empreinte digitale stockée dans le récepteur de données, et mettre en oeuvre des processus subséquents conformément à un résultat de comparaison ; et
lorsque l'item de données est un élément de données, comparer, par le récepteur de données, l'élément de données à un élément de données stocké dans le récepteur de données, et mettre en oeuvre des processus subséquents conformément à un résultat de comparaison ;
où déterminer si l'item de données est une empreinte digitale ou un élément de données en se basant sur les règles prédéfinies comprend les étapes suivantes :
déterminer, par le récepteur de données, si une valeur de longueur de l'item de données est égale à une valeur de longueur d'empreinte digitale prédéfinie après un calcul d'empreinte digitale, où lorsque la valeur de longueur de l'item de données est égale à la valeur de longueur d'empreinte digitale prédéfinie, il est déterminé que l'item de données est l'empreinte digitale obtenue par l'intermédiaire d'un calcul d'empreinte digitale ; et lorsque la valeur de longueur de l'item de données n'est pas égale à la valeur de longueur d'empreinte digitale prédéfinie, il est déterminé que l'item de données est l'élément de données.

5. Procédé selon la revendication 4, dans lequel le procédé comprend en outre l'étape suivante :
lorsque la valeur de longueur de l'item de données est égale à une valeur de longueur minimale prédéfinie, tronquer, par le récepteur de données, l'item de données à la valeur de longueur d'empreinte digitale prédéfinie pour obtenir l'élément de données.

6. Procédé selon la revendication 4 ou la revendication 5, dans lequel la comparaison, par le récepteur de données, de l'empreinte digitale avec l'empreinte digitale stockée dans le récepteur de données, et la mise en oeuvre des processus subséquents selon le résultat de comparaison comprennent les étapes suivantes :
lorsque les deux empreintes digitales sont les mêmes, l'élément de données stocké par le récepteur de données n'a pas besoin d'être mis à jour ; et lorsque les deux empreintes digitales sont différentes, ce qui indique que l'élément de données de l'expéditeur de données est changé, vérifier une stratégie de détection de collision ; et
lorsque la stratégie est basée sur l'élément de données sur le récepteur de données, déterminer que l'expéditeur de données n'a pas besoin d'envoyer l'élément de données ; et lorsque la stratégie est basée sur l'élément de données sur l'expéditeur de données, déterminer que l'expéditeur de données doit envoyer l'élément de données, et il est indiqué à l'expéditeur de données d'envoyer l'élément de données.

7. Dispositif d'envoi de données (1), comprenant :
un module de détermination (10), configuré pour déterminer si une valeur de longueur d'un élément de données est supérieure ou égale à une valeur de longueur minimale prédéfinie ;
un module de calcul d'empreinte digitale (11), configuré pour générer une empreinte digitale correspondante conformément à l'élément de données lorsque le module de détermination détermine que la valeur de longueur de l'élément de données est supérieure ou égale à la valeur de longueur minimale prédéfinie ; et
un module d'envoi de données (12), configuré pour envoyer l'empreinte digitale générée par le module de calcul d'empreinte digitale comme item de données à un dispositif de réception de données ; et pour envoyer l'élément de données comme item de données au dispositif de réception de données sans effectuer de calcul d'empreinte digitale pour l'élément de données lorsque le module de détermination détermine que la valeur de longueur de l'élément de données est inférieure à la valeur de longueur minimale prédéfinie.

8. Dispositif d'envoi de données selon la revendication 7, comprenant en outre :
un module d'identification, configuré pour ajouter une identification à l'élément de données, où l'identification indique si l'item de données est une empreinte digitale ou un élément de données.

9. Dispositif d'envoi de données selon la revendication 7 ou la revendication 8, dans lequel le module de calcul d'empreinte digitale (11) comprend :
une unité de négociation d'algorithme (110), configurée pour négocier avec le dispositif de réception de données un ensemble d'algorithmes d'empreinte digitale pris en charge par les deux côtés ;
une unité de sélection d'algorithme (111), configurée pour sélectionner un algorithme d'empreinte digitale dans l'ensemble d'algorithmes d'empreinte digitale pris en charge par les deux côtés pour calculer l'élément de données lorsqu'un calcul d'empreinte digitale doit être effectué pour l'élément de données ; et
une unité de calcul d'empreinte digitale (112), configurée pour effectuer un calcul d'empreinte digitale pour l'élément de données qui doit générer une empreinte digitale avec l'algorithme sélectionné par l'unité de sélection d'algorithme, où un type d'algorithme de l'élément de données est indiqué par l'identification lorsque le calcul d'empreinte digitale est effectué.

10. Dispositif de réception de données (2), comprenant :
un module de réception de données (21), configuré pour recevoir un item de données envoyé par un dispositif d'envoi de données (1) ;
un module de détermination de données (22), configuré pour déterminer si l'item de données reçu par le module de réception de données est une empreinte digitale ou un élément de données en se basant sur des règles prédéfinies ;
un module de stockage de données (20), configuré pour stocker un élément de données ou une empreinte digitale ; et
un module de traitement de données (23), configuré pour comparer l'empreinte digitale reçue à l'empreinte digitale stockée lorsque le module de détermination de données détermine que l'item de données reçu est une empreinte digitale, et pour mettre en oeuvre des processus subséquents conformément à un résultat de comparaison ; et pour comparer l'élément de données reçu à l'élément de données stocké lorsque le module de détermination de données détermine que l'item de données reçu est un élément de données, et pour mettre en oeuvre des processus subséquents conformément à un résultat de comparaison ;
où lorsqu'il est déterminé si l'item de données reçu par le module de réception de données est une empreinte digitale ou un élément de données en se basant sur des règles prédéfinies, le module de détermination de données (22) est en outre configuré pour déterminer si une valeur de longueur de l'item de données est égale à une valeur de longueur d'empreinte digitale prédéfinie après un calcul d'empreinte digitale ; où lorsque la valeur de longueur de l'item de données est égale à la valeur de longueur d'empreinte digitale prédéfinie, l'item de données est l'empreinte digitale obtenue par l'intermédiaire d'un calcul d'empreinte digitale, et lorsque la valeur de longueur de l'item de données n'est pas égale à la valeur de longueur d'empreinte digitale prédéfinie, l'item de données est l'élément de données.

11. Dispositif de réception de données selon la revendication 10, dans lequel le module de traitement de données (23) comprend :
une unité de traitement d'empreintes digitales (230), configurée pour comparer l'empreinte digitale reçue à l'empreinte digitale stockée lorsque le module de détermination de données détermine que l'item de données reçu est l'empreinte digitale, et pour mettre en oeuvre des processus subséquents conformément au résultat de comparaison ; et
une unité de traitement de données (231), configurée pour comparer l'élément de données reçu à l'élément de données stocké lorsque le module de détermination de données détermine que l'item de données reçu est l'élément de données, et pour mettre en oeuvre des processus subséquents conformément au résultat de comparaison.

12. Dispositif de réception de données selon la revendication 11, dans lequel l'unité de traitement d'empreintes digitales (230) comprend :
une sous-unité de comparaison d'empreintes digitales (2300), configurée pour comparer l'empreinte digitale reçue à l'empreinte digitale stockée lorsque le module de détermination de données détermine que l'item de données reçu est l'empreinte digitale, où lorsque les deux empreintes digitales sont les mêmes, l'élément de données stocké dans le dispositif de réception de données n'a pas besoin d'être mis à jour ; et lorsque les deux empreintes digitales sont différentes, cela indique que l'élément de données du dispositif d'envoi de données est changé ;
une sous-unité de détermination (2301), configurée pour vérifier une stratégie de détection de collision et déterminer si le dispositif d'envoi de données doit envoyer l'élément de données, où, lorsque la stratégie de détection de collision est basée sur l'élément de données sur le dispositif de réception de données, le dispositif d'envoi de données n'a pas besoin d'envoyer l'élément de données ;
une sous-unité d'indication (2302), configurée pour indiquer au dispositif d'envoi de données d'envoyer l'élément de données lorsque les deux empreintes digitales sont différentes et la stratégie de détection de collision est basée sur l'élément de données sur le dispositif d'envoi de données ; et
une sous-unité de mise à jour de données (2303), configurée pour mettre à jour l'élément de données stocké dans l'élément de données reçu.

13. Dispositif de réception de données selon la revendication 11 ou la revendication 12, dans lequel l'unité de traitement de données (231) comprend :
une sous-unité de comparaison de données (2310), configurée pour comparer l'élément de données reçu à l'élément de données stocké lorsque le module de détermination de données détermine que l'élément de données reçu est l'élément de données, où lorsque les deux éléments de données sont les mêmes, l'élément de données stocké dans le récepteur de données n'a pas besoin d'être mis à jour ; et
lorsque les deux éléments de données sont différents, cela indique que l'élément de données du dispositif d'envoi de données est changé ; et
l'unité de traitement de données comprend en outre : une sous-unité de détermination (2311), configurée pour vérifier la stratégie de détection de collision et pour déterminer si l'élément de données stocké dans le dispositif de réception de données doit être mis à jour, où, lorsque la stratégie de détection de collision est basée sur l'élément de données sur le dispositif de réception de données, l'élément de données sur le dispositif de réception de données n'a pas besoin d'être mis à jour ;
une sous-unité de mise à jour de données (2312), configurée pour mettre à jour l'élément de données stocké dans le dispositif de réception de données dans l'élément de données reçu lorsque les deux empreintes digitales sont différentes et la stratégie de détection de collision est basée sur l'élément de données sur le dispositif d'envoi de données.

14. Système pour technologie de prise d'empreintes digitales, comprenant : le dispositif d'envoi de données selon l'une quelconque des revendications 7 à 9, et le dispositif de réception de données selon l'une quelconque des revendications 10 à 13.
